# EUROPEAN PATENT SPECIFICATION

(11) **EP 1 587 092 B1**
(45) Date of publication and mention of the grant of the patent: **17.06.2009**
(21) Application number: 05102627.6
(22) Date of filing: 04.04.2005
(51) Int. Cl.: G11B 7/24

(54) **Write-once information recording medium and dyes therefor**
Einmalig beschreibbares Aufzeichnungsmedium und Farbstoff dafür
Support d'enregistrement non reinscriptible et colorant

(30) Priority: 13.04.2004 JP 2004118345
(43) Date of publication of application: 19.10.2005
(73) Proprietor: KABUSHIKI KAISHA TOSHIBA, Tokyo (JP); HAYASHIBARA BIOCHEMICAL LABORATORIES, INC., Okayama-shi Okayama-ken (JP)
(72) Inventor: Morita, Seiji Toshiba Corporation, Minato-ku Tokyo, 105-8001 (JP); Takazawa, Koji Toshiba Corporation, Minato-ku Tokyo, 105-8001 (JP); Morishita, Naoki Toshiba Corporation, Minato-ku Tokyo, 105-8001 (JP); Nakamura, Naomasa Toshiba Corporation, Minato-ku Tokyo, 105-8001 (JP); Aizawa, Yasushi Hayashibara Biochemical Lab.,Inc., Okayama-ken (JP); Koyama, Yoshinori, Okayama-ken (JP)
(74) Representative: Henkel, Feiler & Hänzel

(56) References cited:
- EP-A- 1 369 861
- WO-A-02/082438
- US-A- 5 776 656
- US-A- 6 071 672

## Description

The present invention relates to a write-once information recording medium capable of recording and reproducing information by short wavelength laser light such as blue laser light.

As personal computers or the like are used commonly, recently, importance of media for storing digital data is increasing. At the present, information recording media for digitally recording and reproducing video and audio information for a long time are widely distributed. Also in mobile appliances such as cell phones, information recording media for digital recording and reproduction are used.

As this kind of information recording medium, in particular, the disk type is used widely because it is large in information recording capacity, high in random access performance capable of searching desired recorded information quickly, small in size, light in weight, excellent in storing and carrying property, and economical and inexpensive.

Among such disk type information recording media, at the present, a so-called optical disk is in the mainstream owing to the benefits of contact-free recording and reproducing of information only by emission of laser light. The optical disks mainly conform to the compact disk (CD) standard and the digital versatile disk (DVD) standard, and these standards are compatible.

Optical disks are classified in three types: a read-only type not allowed to record information such as CD-DA (digital audio), CD-ROM (read only memory), DVD-V (video) and DVD-ROM; a write-once type allowed to write information only once such as CD-R (recordable) and DVD-R; and a rewritable type allowed to write information as many times as desired such as CD-RW (rewritable) and DVD-RW.

Among recordable disks, the write-once type optical disk using an organic pigment in a recording layer is most widely distributed because it is low in manufacturing cost. When the information recording capacity is over 700 megabytes (MB), it is hardly required to erase the recorded information and write new information, and indeed it is enough to record data only once.

In the write-once type optical disk using an organic pigment in a recording layer, laser light is emitted to recording regions (tracks) defined by grooves, a resin substrate is heated at the glass transition point Tg or more, and an organic pigment film in the grooves is pyrolyzed to cause negative pressure. As a result, the resin substrate is deformed within the groove, and thereby a recording mark is formed.

As the organic pigment for use in a CD-R of which wavelength of laser light for recording and reproducing is about 780 nm, representative examples are phthalocyanine pigments such as IRGAPHOR Ultragreen MX of Ciba Specialty Chemicals. As the organic pigment for use in a DVD-R of which wavelength of laser light for recording and reproducing is about 650 nm, representative examples are azo metal complex pigments of Mitsubishi Chemical Media.

In the next-generation optical disk for realizing recording and reproduction of higher density and higher performance as compared with the existing optical disk, blue laser light of wavelength of about 405 nm is used as laser light for recording and reproducing. Using light of such shorter wavelength, however, an organic pigment capable of obtaining practically sufficient recording and reproducing characteristic has not been known yet.

That is, in the existing optical disk for recording and reproducing by using infrared ray laser light or red laser light, it is general to use an organic pigment having maximum absorption at the shorter wavelength side from the wavelength of laser light for recording and reproducing (780 nm, 650 nm). Accordingly, in the existing optical disk, the light reflectivity of the recording mark portion formed by irradiation with laser light is lower than the light reflectivity before irradiation with laser light, that is, H (high) to L (low) characteristic is realized.

By contrast, when recording or reproducing by using blue laser light, an organic pigment material having maximum absorption at the shorter wavelength side from the wavelength of laser light for recording and reproducing (405 nm), not only the stability and storage durability in ultraviolet rays are poor, but also stability in heat is low, and the contrast and resolution of the recording mark are low.

Since oozing of the recording mark is also significant, adjacent tracks may be also disturbed, and the cross light characteristic is likely to deteriorate. Further, the recording sensitivity drops, and it is hard to obtain a sufficient signal-to-noise (SN) ratio of a reproduced signal or a bit error rate.

In the condition not to allow recording of information in an adjacent track, a certain recording density may be obtained, but once information is recorded in an adjacent track, cross light to the adjacent track is significant. Therefore, the SN ratio of the reproduced signal is low, the bit error rate is high, and it is far from the practical level.

Patent document 1 (Jpn. Pat. Appln. KOKAI Publication No. 2002-74740) discloses an optical recording medium in which the maximum absorption of an organic pigment compound contained in a recording layer is at longer wavelength than the wavelength of writing light. The patent document 1, however, discloses nothing about the composition of an organic material and specifically obtained characteristic. That is, by selecting a specific organic material, nothing is mentioned about the feature of improving the performance of an optical disk itself, such as changes of light reflectivity before and after laser light irradiation, an SN ratio of a reproduced signal, and a bit error rate, and a disk cannot be manufactured actually by using an organic material.

EP-A-1 369 861 discloses an optical recording medium which comprises a substrate and a recording layer provided on the substrate by using a specific organic dye compound having absorption maximum in a region with wavelengths longer than that of a writing light used, and which records information by allowing to irradiate the recording layer with the writing light to act on the dye compound to form a pit on the substrate.

The invention has been devised in the light of the above background, and an object of the invention is to provide a write-once information recording medium capable of recording and reproducing information at high density and high performance of practical level, for example, by using a short wavelength laser light such as blue laser light.

A write-once information recording medium according to the invention comprises: a transparent substrate having concentric or spiral grooves formed therein; and
a recording film containing an organic pigment, being formed on the grooves on the transparent substrate,
wherein a maximum absorption wavelength region of said organic pigment from the wavelength of laser light to be emitted to the recording film is present at the longer wavelength side, a recording mark is formed on the recording film by irradiation with laser light, and the recording mark has a higher light reflectivity than the light reflectivity of the recording film before irradiation with the laser light,
characterized in that the organic pigment has an anion portion made of an azo metal complex, and a cation portion made of a monomethine cyanine pigment,
said organic pigment being formed by reaction between a first compound whose cation portion is made of a monomethine cyanine pigment and whose anion portion is not made of an azo metal complex and a second compound whose anion portion is made of an azo metal complex and whose cation portion is not made of a monomethine cyanine pigment, and has a cation portion made of a monomethine cyanine pigment and an anion portion made of an azo metal complex.

According to the invention, the recording film has a low-to-high characteristic, that is, the light reflectivity of the recording mark portion formed by irradiation is higher than before irradiation with short wavelength laser light. Therefore, by using short wavelength laser light, it is excellent in the aspects of storage durability, reproduced signal SN ratio, and bit error rate, so that it is possible to record and reproduce information at high density and high performance of sufficiently practical level.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows four examples of organic pigment materials to be contained in a recording film according to an embodiment of the invention;
FIG. 2 shows characteristic diagrams for explaining changes of absorbance in relation to wavelength of laser light about three of the above organic pigment materials;
FIG. 3 shows characteristic diagrams for explaining changes of absorbance in relation to wavelength of laser light about remaining one of the above organic pigment materials;
FIG. 4 shows diagrams for explaining part of a method of manufacturing a disk stamper for forming a write-once type optical disk in the embodiment;
FIG. 5 shows diagrams for explaining the remainder of the method of manufacturing a disk stamper;
FIG. 6 shows diagrams for explaining a method of manufacturing the write-once type optical disk;
FIG. 7 is a graph for explaining a spin coating condition for an organic pigment solution in the method of manufacturing the write-once type optical disk;
FIG. 8 is a diagram for explaining a relation between a groove and a land in the write-once type optical disk;
FIG. 9 shows explanatory diagrams of a wobble of a groove track in the write-once type optical disk;
FIG. 10 shows a waveform diagram showing an example of a signal to be recorded for an evaluation test of evaluating recording and reproduction of the write-once type optical disk; and
FIG. 11 is an explanatory diagram of results of measurement of the evaluation test of the write-once type optical disk in 11 examples of the organic pigment materials.

Referring now to the drawings, one embodiment of the invention will be described below. A write-once information recording medium explained in the embodiment has a transparent resin substrate formed in a disk form by using a synthetic resin material such as polycarbonate. Concentric or spiral grooves are formed in the transparent resin substrate. The transparent resin substrate is manufactured by injection molding by using a stamper.

A recording film containing an organic pigment is formed on the transparent resin substrate so as to fill up its grooves. The organic pigment for forming the recording film is characterized by its maximum absorption wavelength region shifted to the longer wavelength side from the recording wavelength (405 nm). Although the absorption is not extinguished in the recording wavelength region, it is designed to have a considerable light absorption.

Accordingly, when the track before recording information is focused or tracked by a recording laser light, the light reflectivity is low. By laser light, decomposition reaction of the pigment occurs, light absorption rate is lowered, and hence the light reflectivity in a recording mark portion is raised. As a result, the light reflectivity in the recording mark portion formed by irradiation with light is higher than the light reflectivity before irradiation with laser light, that is, a so-called L-to-H characteristic is realized.

By the generated heat, meanwhile, the transparent resin substrate may be deformed, especially in the groove bottom. In this case, phase difference may occur in the reflected light.

The organic pigment is dissolved in a solvent to obtained a liquid, which can be easily applied on the transparent resin substrate surface by a spin coating method. In this case, by controlling the dilution factor by the solvent and the number of rotations during spin coating, the film thickness can be controlled at high precision.

The organic pigment is composed of a pigment portion (cation portion) and a paired ion (anion) portion. As the pigment portion, a monomethine a cyanine pigment is used. In particular, the monomethine cyanine pigment is preferred because it is easy to control the absorption rate in relation to the recording wavelength.

In particular, a monomethine cyanine pigment having a monomethine chain is preferred because, when the recording film applied on the transparent resin substrate is formed in a thin film, the absorbance in the maximum absorption and recording wavelength region (400 nm to 405 nm) can be easily adjusted to about 0.3 to 0.5, preferably about 0.4, that is, the transmissivity can be adjusted to about 0.7 to 0.5, preferably about 0.6. Hence, the recording and reproducing characteristic can be improved, and both light reflectivity and recording sensitivity can be both designed favorably.

The organic pigment of the invention is composed of a negatively charged anion portion and a positively charged cation portion. In the short wavelength laser light such as blue laser light, the cation portion in the organic pigment of the invention is substantially an atomic group exhibiting a substantial light absorbing ability, that is, a pigment portion. Thus, in the following explanation, the cation portion may be also called the "pigment portion".

The anion portion is an azo metal complex from the viewpoint of light stability. The azo metal complex mainly composed of metal such as cobalt and nickel is particularly excellent in light stability.

An azo metal complex is used. The solubility is excellent by using 2,2,3,3-tetrafluoro-1-propanol (TFP) as a solvent, and a solution for spin coating can be prepared easily. Further, since recycling after spin coating is also possible, the manufacturing cost of the optical disk can be lowered.

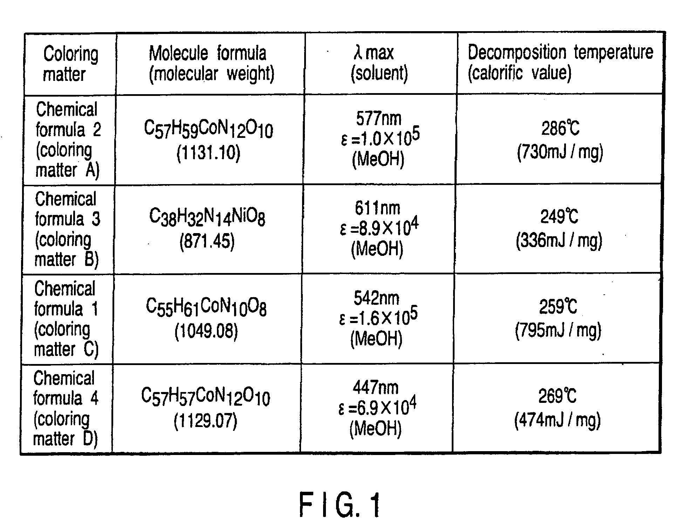

FIG. 1 shows four examples of Pigments A to D, as organic pigment materials. Pigment A comprises a pigment portion (cation portion) of a styryl pigment, and an anion portion of an azo metal complex 1. Pigment C comprises a pigment portion (cation portion) of a styryl pigment, and an anion portion of an azo metal complex 2. Pigment D comprises a pigment portion (cation portion) of a monomethine cyanine pigment, and an anion portion of the azo metal complex 1. An organic metal complex alone may be also used. For example, Pigment B is a nickel complex pigment only. Only, Pigment D falls within the scope of the present invention.

The disk substrate coated with the organic pigment thin film after spin coating is heated by hot plate or clean oven to temperature of about 80°C to dry the pigment, and a metal thin plate as a light reflective film is formed on the thin film by sputtering. As the metal reflective film material, for example, Au, Ag, Cu, Al, or their alloys may be used.

Thereafter, by spin coating of ultraviolet curing resin on the metal film, a disk substrate for protection is glued, and a write-once type optical disk is manufactured as a write-once information recording medium.

General formula 1 shows a general formula of the styryl pigment as the pigment portion of Pigments A and C, and general formula 2 shows a general formula of the azo metal oxide as the anion portion of Pigments A and C. General formula 3 shows a general formula of the monomethine cyanine pigment as the pigment portion of Pigment D, and general formula 4 shows a general formula of the azo metal oxide as the anion portion of Pigment D.

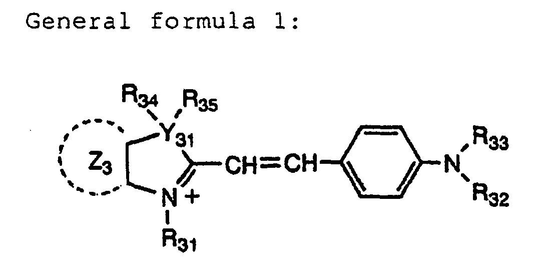

In general formula 1 of the styryl pigment, Z₃ represents an aromatic ring, and the aromatic ring may have a substituent. Y₃₁ represents a carbon atom or a hetero atom. R₃₁, R₃₂ and R₃₃ represent mutually same or different aliphatic hydrocarbon radicals, and these aliphatic hydrocarbon radicals may have substituents. R₃₄ and R₃₅ each independently represent a hydrogen atom or a proper substituent, and when Y₃₁ is a hetero atom, either one or both of R₃₄ and R₃₅ are absent.

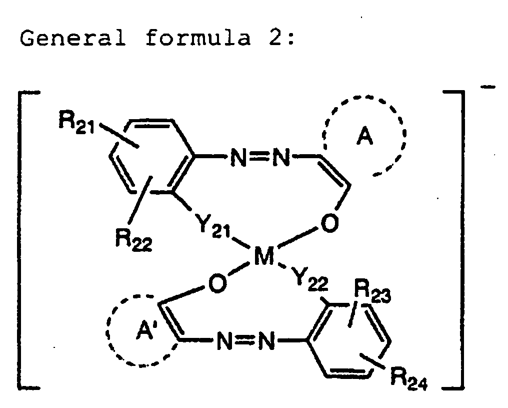

In general formula 2, A and A' represent mutually same or different complex rings, containing one or more hetero atoms selected from the group consisting of a nitrogen atom, an oxygen atom, a sulfur atom, a selenium atom, and a tellurium atom. R₂₁ to R₂₄ independently represent a hydrogen atom or a proper substituent. Y₂₁ and Y₂₂ represent mutually same or different hetero atoms selected from the elements of group XVI in the periodic table.

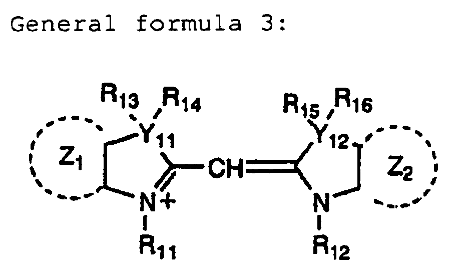

In general formula 3, in the general formula of the monomethine cyanine pigment, Z₁ and Z₂ represent mutually same or different aromatic rings, and these aromatic rings may have substituents. Y₁₁ and Y₁₂ independently represent a carbon atom or a hetero atom. R₁₁ and R₁₂ represent aliphatic hydrocarbon radicals, and these aliphatic hydrocarbon radicals may have substituents. R₁₃, R₁₄, R₁₅, and R₁₆ independently represent a hydrogen atom or a proper substituent, and when Y₁₁ and Y₁₂ are hetero atoms, either part or all of R₁₃, R₁₄, R₁₅, and R₁₆ are absent.

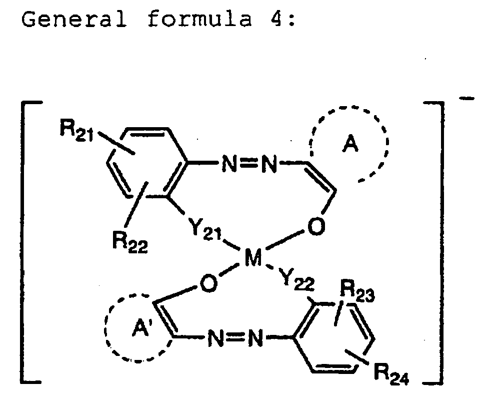

In general formula 4, A and A' represent mutually same or different complex rings, containing one or more hetero atoms selected from the group consisting of a nitrogen atom, an oxygen atom, a sulfur atom, a selenium atom, and a tellurium atom. R₂₁ to R₂₄ independently represent a hydrogen atom or a proper substituent. Y₂₁ and Y₂₂ represent mutually same or different hetero atoms selected from the elements of group XVI in the periodic table.

The monomethine cyanine pigment used in the embodiment is any one of mutually same or different pigment having one or more substituents at both ends of the monomethine chain possibly having one or more substituents, including pigments coupled with ring nucleus such as an imidazoline ring, an imidazole ring, a benzimidazole ring, an alpha-naphthoimidazole ring, a beta-naphthoimidazole ring, an indole ring, an isoindole ring, an indorenin ring, an isoindorenin ring, a benzoindorenin ring, a pyridinoindorenin ring, an oxazoline ring, an oxazole ring, an iso-oxazole ring, a benzo-oxazole ring, a pyridino-oxazole ring, an alpha-naphtho-oxazole ring, a beta-naphtho-oxazole ring, a selenazoline ring, a selenazole ring, a benzoselenazole ring, an alpha-naphthoselenazole ring, a beta-naphthoselenazole ring, a thiazoline ring, a thiazole ring, an isothiazole ring, a benzothiazole ring, an alpha-naphthothiazole ring, a beta-naphthothiazole ring, a tellurazoline ring, a tellurazole ring, a benzotellurazole ring, an alpha-naphthotellurazole ring, a beta-naththotellurazole ring, and further, an acrylidine ring, an anthracene ring, an isoquinoline ring, an isopyrrole ring, an imidanoxaline ring, an indandione ring, an indazole ring, an indaline ring, an oxadiazole ring, a carbazole ring, a xanthene ring, a xanazoline ring, a quinoxaline ring, a quinoline ring, a couromane ring, a cyclohexanedione ring, a cyclopenetanedione ring, a cinnoline ring, a thiodiazole ring, a thiooxazolidone ring, a thiophene ring, a thionaphthene ring, a thiobarbituric acid ring, a thiohydantoin ring, a tetrazole ring, a triazine ring, a naphthalene ring, a naphthyridine ring, a piperazine ring, a pyradine ring, a pyrazole ring, a pyrazoline ring, a pyrazolidine ring, a pyrazolone ring, a pyrane ring, a pyridine ring, a pyridazine ring, a pyrimidine ring, a pyririum ring, a pyrrolidine ring, a pyrophosphate ring, a pyrrole ring, a phenadine ring, a phenanthridine ring, a phenanthrene ring, a phenanthrophosphate ring, a phthalazine ring, a preryzine ring, a furazane ring, a furan ring, a purin ring, a benzene ring, a benzo-oxazine ring, a benzopyrane ring, a morpholine ring and a rhodanine ring.

In the general formulas of the monomethine cyanine pigment and styryl pigment, Z₁ to Z₃ represent, for example, aromatic rings such as a benzene ring, a naphthalene ring, a pyridine ring, a quinoline ring, and a quinoxaline ring, and these aromatic rings may have one or plural substituents. Examples of the substituents include aliphatic hydrocarbon radicals such as a methyl radical, a trifluoromethyl radical, an ethyl radical, a propyl radical, an isopropyl radical, a butyl radical, an isobutyl radical, a sec-butyl radical, a tert-butyl radical, a pentyl radical, an isopentyl radical, a neopentyl radical, a tert-pentyl radical, a 1-methyl pentyl radical, a 2-methyl pentyl radical, a hexyl radical, an isohexyl radical, a 5-methyl hexyl radical, a heptyl radical and an octyl radical; alicyclic hydrocarbon radicals such as a cyclopropyl radical, a cyclobutyl radical, a cyclopentyl radical and a cyclohexyl radical; aromatic hydrocarbon radicals such as a phenyl radical, a biphenylyl radical, an o-tolyl radical, an m-tolyl radical, a p-tolyl radical, a xylyl radical, a methycyl radical, an o-cumenyl radical, an m-cumenyl radical and a p-cumenyl radical; ether radicals such as a methoxy radical, a trifluoromethoxy radical, an ethoxy radical, a propoxy radical, an isopropoxy radical, a butoxy radical, a sec-butoxy radical, a tert-butoxy radical, a pentyloxy radical, a phenoxy radical and a benzoyloxy radical; ester radicals such as a methoxycarbonyl radical, a trifluoromethoxy carbonyl radical, an ethoxycarbonyl radical, a propoxycarbonyl radical, an acetoxy radical and a benzoyl oxy radical; halogen radicals such as a fluoro radical, a chloro radical, a bromo radical and an iodo radical; thio radicals such as a methylthio radical, an ehtylthio radical, a propylthio radical, a butylthio radical and a phenylthio radical; sulfamoyl radicals such as a methyl sulfamoyl radical, a dimethyl sulfamoyl radical, an ethyl sulfamoyl radical, a diethyl sufamoyl radical, a propyl sulfamoyl radical, a dipropyl sulfamoyl radical, a butyl sulfamoyl radical and a dibutyl sulfamoyl radical; amino radicals such as a primary amino radical, a methylamino radical, a dimethylamino radical, an ethylamino radical, a diethylamino radical, a propylamino radical, a dipropylamino radical, an isopropylamino radical, a diisopropylamino radical, a butylamino radical, a dibutylamino radical and a piperidino radical; carbamoyl radicals such as a methyl carbamoyl radical, a dimethyl carbamoyl radical, an ethyl carbamoyl radical, a diethyl carbamoyl radical, a propyl carbamoyl radical and a dipropyl carbamoyl radical; and further, a hydroxyl radical, a carboxy radical, a cyano radical, a nitro radical, a sulfino radical, a sulfo radical, a mesyl radical, etc. In general formula 3, Z₁ and Z₂ may be either mutually same or different.

In the general formulas of the monomethine cyanine pigment and styryl pigment, Y₁₁, Y₁₂, and Y₃₁ represent carbon atoms or hetero atoms. The hetero atoms include a nitrogen atom, an oxygen atom, a sulfur atom, a selenium atom, and a tellurium atom, and other atoms selected from the elements of groups XV and XVI in the periodic table. The carbon atom in Y₁₁, Y₁₂, and Y₃₁ may be an atomic group mainly comprising two carbon atoms such as an ethylene radical and a vinylene radical. In the general formula of the monomethine cyanine pigment, Y₁₁ and Y₁₂ may be either mutually same or different.

In the general formulas of the monomethine cyanine pigment and styryl pigment, R₁₁, R₁₂, R₁₃, R₃₂, and R₃₃ represent aliphatic hydrocarbon radicals. Examples of the aliphatic hydrocarbon radicals include a methyl radical, an ethyl radical, a propyl radical, an isopropyl radical, an isopropenyl radical, a 1-propenyl radical, a 2-propenyl radical, a butyl radical, an isobutyl radical, a sec-butyl radical, a tert-butyl radical, a 2-butenyl radical, a 1,3-butadienyl radical, a pentyl radical, an isopentyl radical, a neopentyl radical, a tert-pentyl radical, a 1-methylpentyl radical, a 2-methylpentyl radical, a 2-pentenyl radical, a hexyl radical, an isohexyl radical, a 5-methylhexyl radical, a peptyl radical, an octyl radical, and others. These aliphatic hydrocarbon radicals may have one or plural substituents same as in Z₁ to Z₃.

Incidentally, R₁₁ and R₁₂ in the general formula of the monomethine cyanine pigment, and R₁₂, R₃₂, and R₃₃ in the general formula of the styryl pigment may be either mutually same or different.

In the general formulas of the monomethine cyanine pigment and styryl pigment, R₁₃ to R₁₆, R₃₄, and R₃₅ represent hydrogen atoms or proper substituents, independently in the individual formulas. Examples of the substituents include aliphatic hydrocarbon radicals such as a methyl radical, a trifluoromethyl radical, an ethyl radical, a propyl radical, an isopropyl radical, a butyl radical, an isobutyl radical, a sec-butyl radical, a tert-butyl radical, a pentyl radical, an isopentyl radical, a neopentyl radical, a tert-pentyl radical, a 1-methyl pentyl radical, a 2-methyl pentyl radical, a hexyl radical, an isohexyl radical, a 5-methyl hexyl radical, a heptyl radical and an octyl radical; ether radicals such as a methoxy radical, a trifluoromethoxy radical, an ethoxy radical, a propoxy radical, a butoxy radical, a tert-butoxy radical, a pentyloxy radical, a phenoxy radical and a benzoyloxy radical; halogen radicals such as a fluoro radical, a chloro radical, a bromo radical and an iodo radical; and further, a hydroxy radical, a carboxy radical, a cyano radical, and a nitro radical. In the general formulas of the monomethine cyanine pigment and styryl pigment, if Y₁₁, Y₁₂, and Y₃₁ are hetero atoms, part or all of R₁₃ to R₁₆ in Z₁ and Z₂, and part or all of R₃₄ and R₃₅ in Z₃ are absent.

In the general formula of the azo metal complex, A and A' represent mutually same or different complex ring radicals of five rings to ten rings, containing one or more hetero atoms selected from a nitrogen atom, an oxygen atom, a sulfur atom, a selenium atom, and a tellurium atom, such as a furyl radical, a thienyl radical, a pyridyl radical, a piperidino radical, a piperidyl radical, a quinolyl radical, and an iso-oxazolyl radical. The complex ring radical has one or more substituents, such as aliphatic hydrocarbon radicals such as a methyl radical, a trifluoromethyl radical, an ethyl radical, a propyl radical, an isopropyl radical, a butyl radical, an isobutyl radical, a sec-butyl radical, a tert-butyl radical, a pentyl radical, an isopentyl radical, a neopentyl radical, a tert-pentyl radical, a 1-methyl pentyl radical, a 2-methyl pentyl radical, a hexyl radical, an isohexyl radical and a 5-methyl hexyl radical; ester radicals such as a methoxycarbonyl radical, a trifluoromethoxy carbonyl radical, an ethoxycarbonyl radical, a propoxycarbonyl radical, an acetoxy radical, a trifluoroacetoxy radical and a benzoyl oxy radical; aromatic hydrocarbon radicals such as a phenyl radical, a biphenylyl radical, an o-tolyl radical, a m-tolyl radical, a p-tolyl radical, an o-cumenyl radical, an m-cumenyl radical, a p-cumenyl radical, a xylyl radical, a mesityl radical, a styryl radical, a cinnamoyl radical and a naphtyl radical; and further, a carboxy radical, a hydroxy radical, a cyano radical, and a nitro radical.

Specific examples of the styryl pigment include those expressed by chemical formula 1 or 2. These styryl pigments can be obtained by the method conforming to the method disclosed in Jpn. Pat. Appln. KOKAI Publication No. 2002-206061 (Title of the invention: Styryl pigment) and published patent No. WO01-40382 (Title of the invention: Styryl pigment).

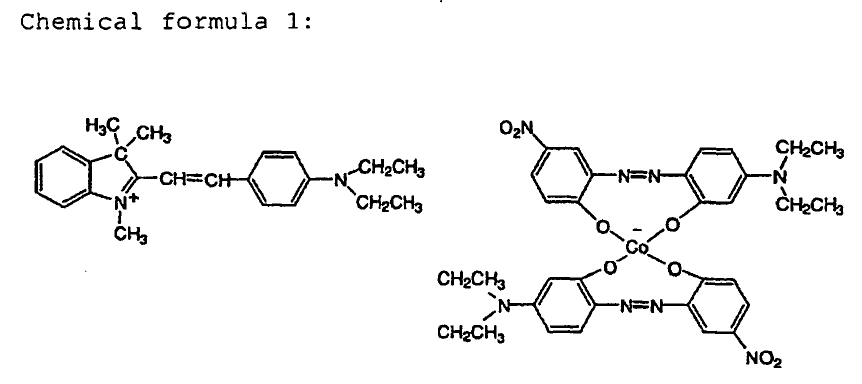

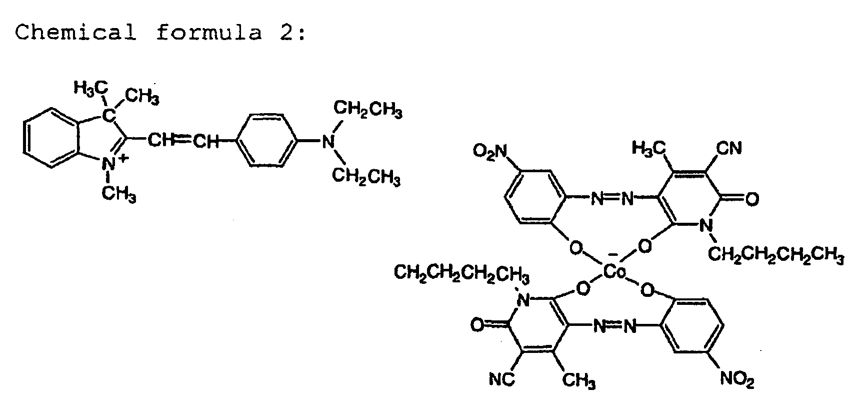

Specific examples of a formazan metal complex in the invention include those expressed by chemical formula 3. The formazan metal complex is obtained by the method conforming to the method disclosed in published patent No. MO00-075111 (Title of the invention: Formazan metal complex).

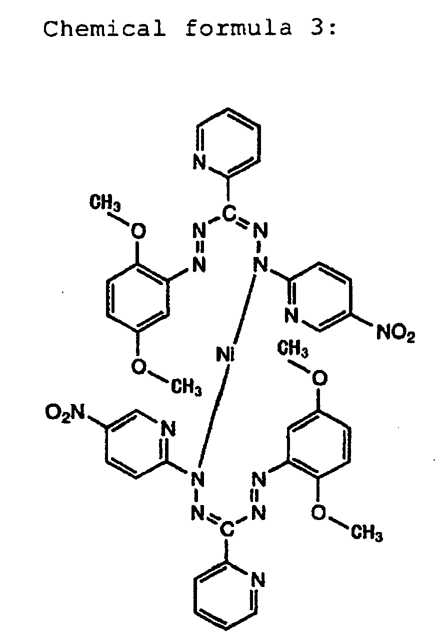

Specific examples of a cyanine pigment in the invention include those expressed by chemical formulas 4 to 11.

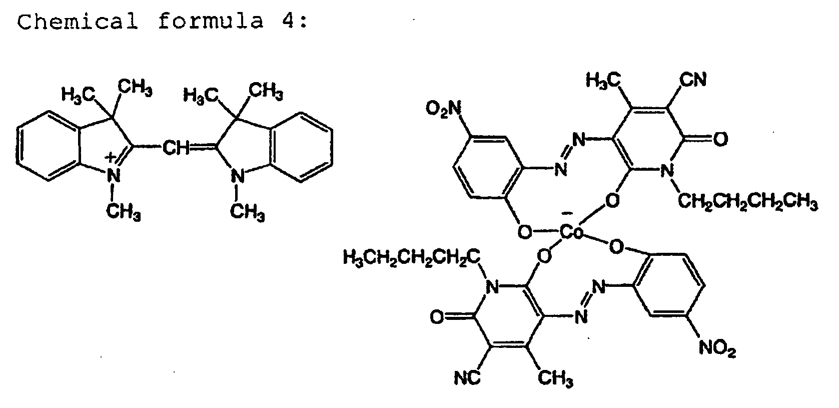

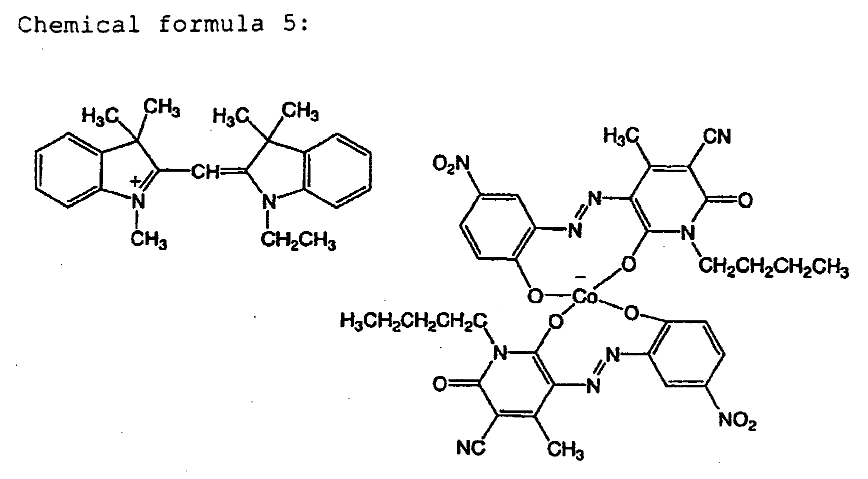

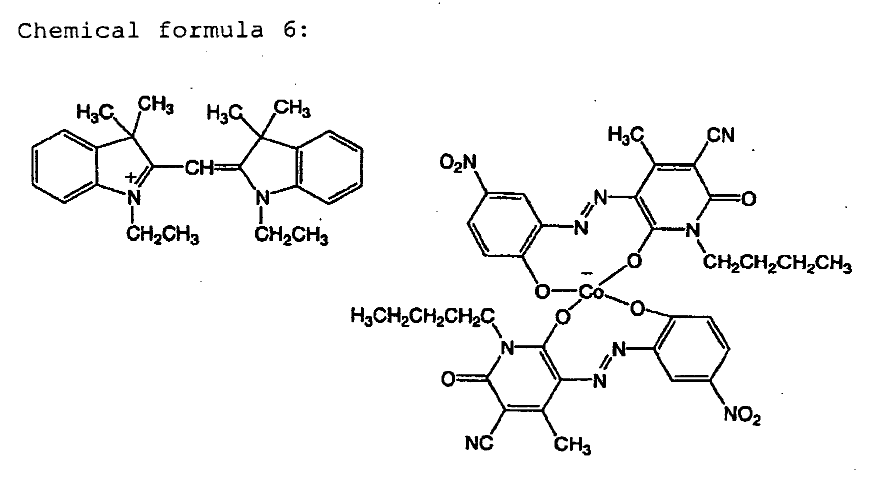

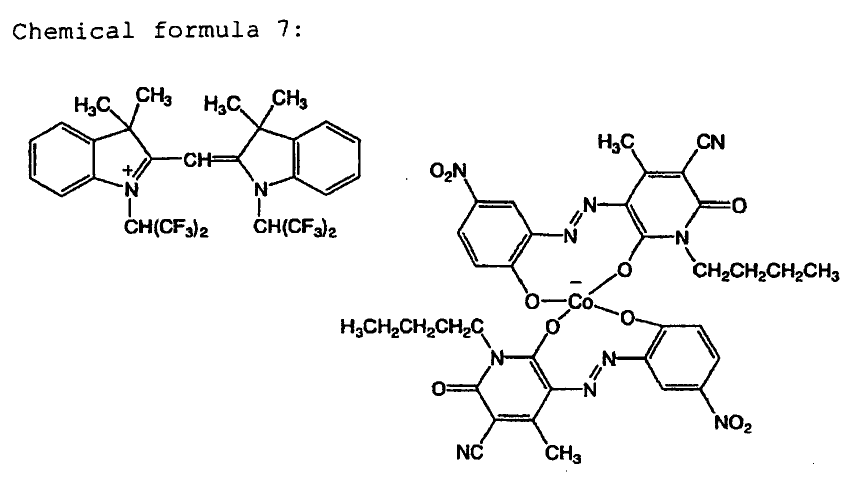

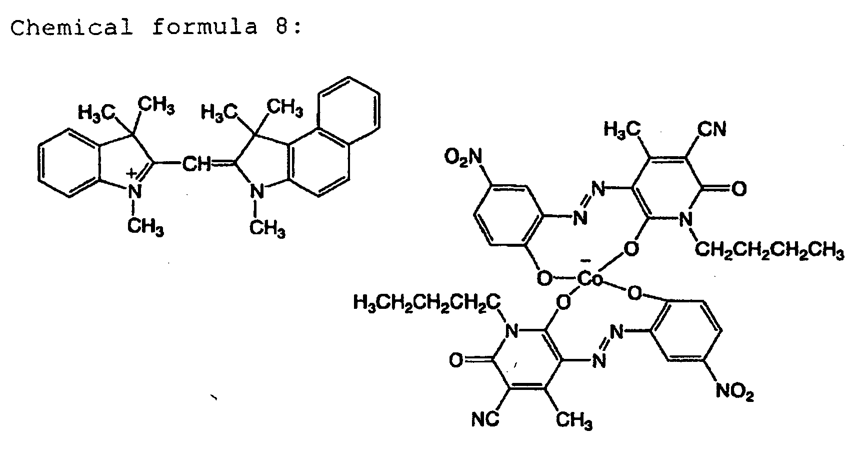

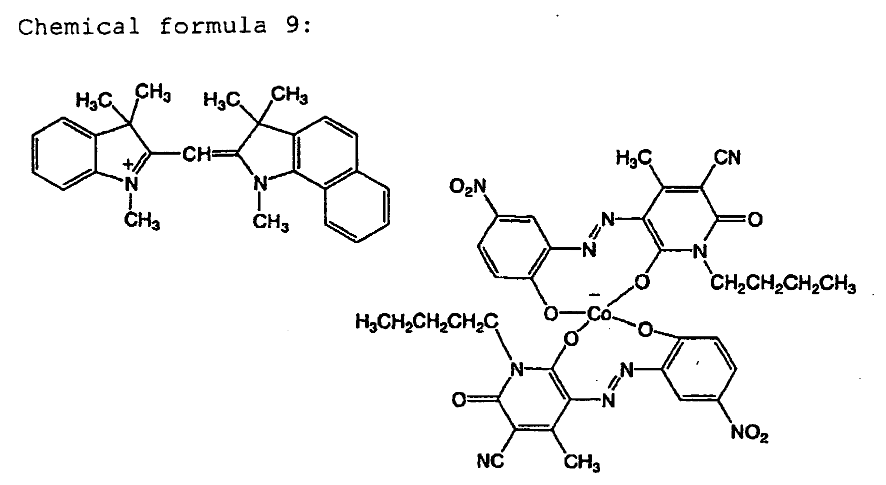

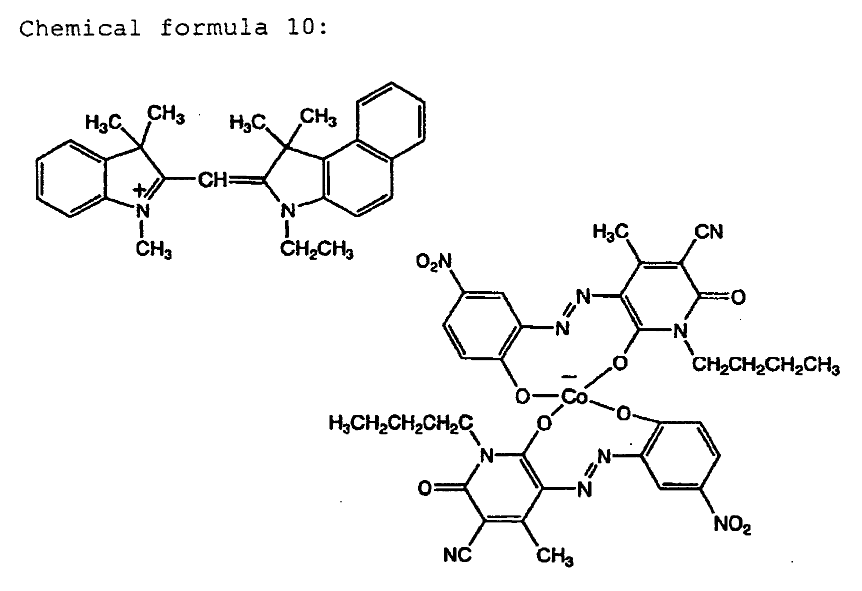

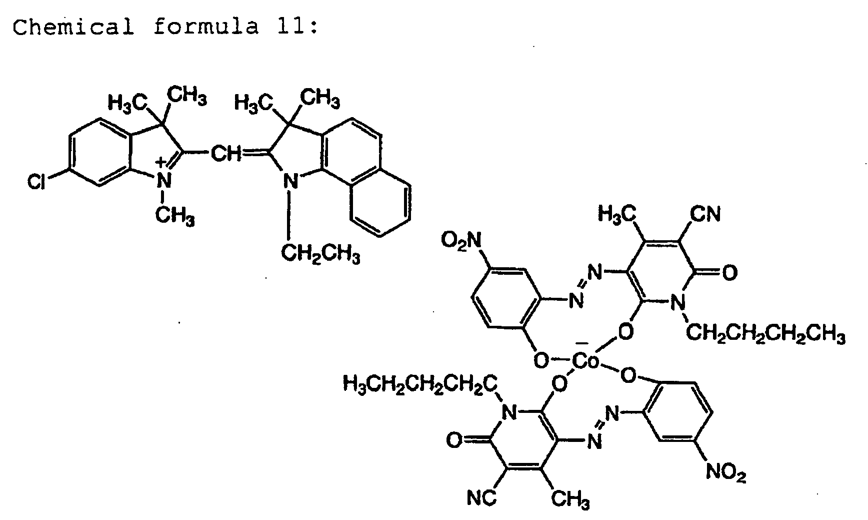

The monomethine cyanine pigment of the invention can be obtained at high yield by reaction between the compound expressed by general formula 5 having Z₁, Z₂, R₁₁, and R₁₂ corresponding to general formula 3, and the compound expressed by general formula 6 having R₂₁ to R₂₄ corresponding to general formula 4. In general formula 5, X₁ represents a proper anion including inorganic acid ions such as fluorine ion, chlorine ion, bromine ion, iodine ion, fluoric acid ion, chloric acid ion, bromic acid ion, iodic acid ion, perchloric acid ion, phosphoric acid ion, phosphoric hexafluoride ion, antimonic hexafluride ion, stannic hexafluoride ion, hydrogen borofluoride ion, and boric tetrafluoride ion; and organic acid ions such as thiocyanic acid ion, benzene sulfonic acid ion, naphthalene sulfonic acid ion, naphthalene disulfonic acid ion, benzene carboxylic acid ion, alkyl carboxylic acid ion, trihaloalkyl carboxylic acid ion, alkyl sulfuric acid ion, trihaloalkyl sulfuric acid ion, nicotinic acid ion, and tetracyano quinodimethane ion. X₂ in general formula 6 represents a proper cation, including onium ions such as alkyl ammonium ion, pyridinium ion, and quinolinium ion.

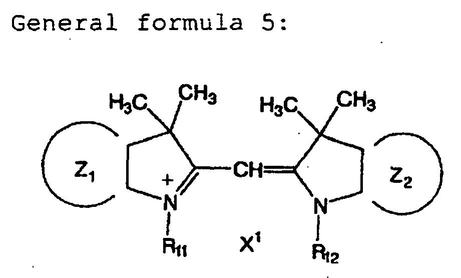

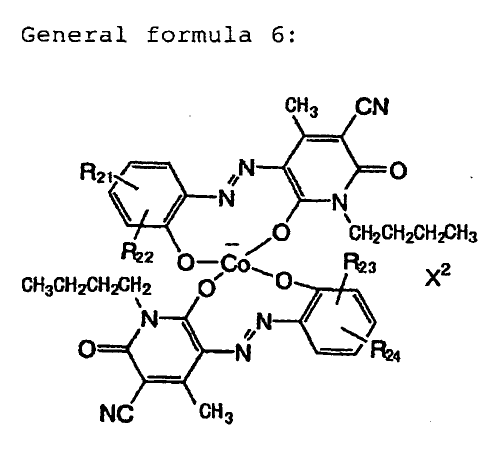

In the operation of synthesis, proper amounts of compounds expressed by general formulas 5 and 6 are put into a reaction container, dissolved in a proper if necessary, and heated and agitated by heating reflux or the like, and reaction takes place at ambient temperature or a slightly higher temperature than ambient temperature.

Various solvents may be used, for example, hydrocarbons such as pentane, hexane, cyclohexane, petroleum ether, octane, petroleum benzine, iso-octane, benzene, toluene, and xylene; halides such as carbon tetrachloride, chloroform, 1,2-dionioroethane, 1,2-dibromoethane, trichlorethylene, tetrachloroethylene, chlorobenzene, bromobenzene, and alpha-dichlorobenzenne; alcohols and phenols such as methanol, ethanol, 2,2,2-trifluoroethanol, 1-propanol, 2-propanol, 1-butanol, 2-butanol, isobutyl alcohol, isopentyl alcohol, cyclohexanol, ethylene glycol, propylene glycol, 2-methoxy ethanol, 3-ethoxy ethanol, phenol, benzyl alcohol, cresol, diethylene glycol, triethylene glycol, and glycerin; ethers such as diethyl ether, diisopropyl ether, tetrahydrofuran, tetrahydropyran, 1,4-dioxane, annisol, 1,2-dimethoxy ethane, diethylene glycol dimethyl ether, dicyclohexyl-18-crown-6, methyl carbitol, and ethyl carbitol; acids and acid derivatives such as acetic acid, acetic anhydride, trichloroacetic acid, trifluoroacetic acid, ethyl acetate, butyl acetate, ethylene carbonate, propylene carbonate, formamide, N-methyl formamide, hexamethyl phosphoric acid triamide, and triethyl phosphate; nitriles such as acetonitrile, propionitrile, succinonitrile, and benzonitrile; nitro compounds such as nitromethane and nitrobenzene; compounds containing sulfur such as dimethyl sulfoxide and sulforane; and water, which may be used alone or combined properly as required.

When using a solvent, generally, as the amount of the solvent increases, the efficiency of reaction drops, or when the amount is small, it may be hard to heat and agitate uniformly, or side reaction is likely to occur. Therefore, the amount of the solvent should be preferably controlled within 100 times by weight, usually 5 to 50 times. Although variable with the type of material compound and reaction condition, usually, the reaction completes within 10 hours, mostly within 5 hours. The progress of reaction can be monitored by thin layer chromatography, gas chromatography, high performance liquid chromatography, or other general method. A desired amount of the cyanine pigment of the invention can be obtained by this method or any conforming method. The compounds expressed by general formulas 5 and 6 can be obtained by the method conforming to the method disclosed in "Photosensitive pigment," edited by Masaaki Hayami, October 17, 1997, Sangyo Tosho KK., pp. 24-30, or when a commercial product is available, it may be used, as required, by refining.

The azo compound composing the azo organic metal oxide expressed in the general formula is prepared by ordinary method, by reaction between a diazonium salt having R₂₁, R₂₂, or R₂₃, R₂₄ corresponding to the general formula, and a complex ring compound having an active methylene radical adjacent to a carboxyl radical in the molecule, for example, an iso-oxazolone compound, an oxazolone compound, a thionaphthene compound, a pyrazolone compound, a barbituric acid compound, a hydantoin compound, and a rhodanine compound. Y₂₁ and Y₂₂ are mutually same or different hetero atoms selected from the elements of group XVI in the periodic table, such as an oxygen atom, a sulfur atom, a selenium atom, and a tellurium atom.

The azo metal complex expressed in the general formula is used in a form of metal complex, usually one or a plurality being coordinated in the metal (central atom). Examples of the metal element as a central atom include scandium, yttrium, titanium, zirconium, hafnium, vanadium, niobium, tantalum, chromium, molybdenum, tungsten, manganese, technetium, rhenium, iron, lutenium, osmium, cobalt, rhodium, iridium, nickel, palladium, platinum, copper, silver, gold, zinc, cadmium, and mercury, and cobalt is most preferable.

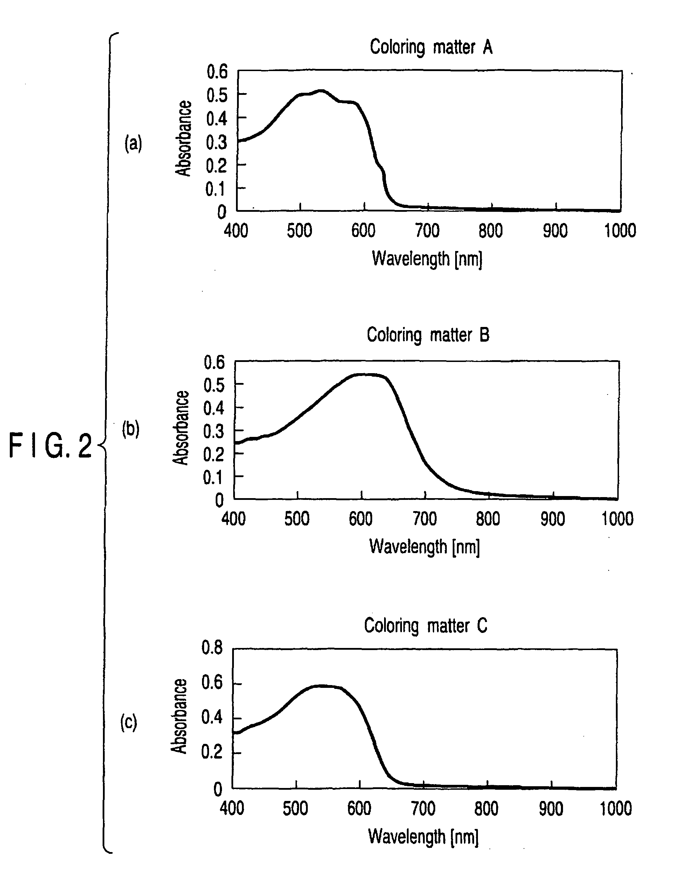

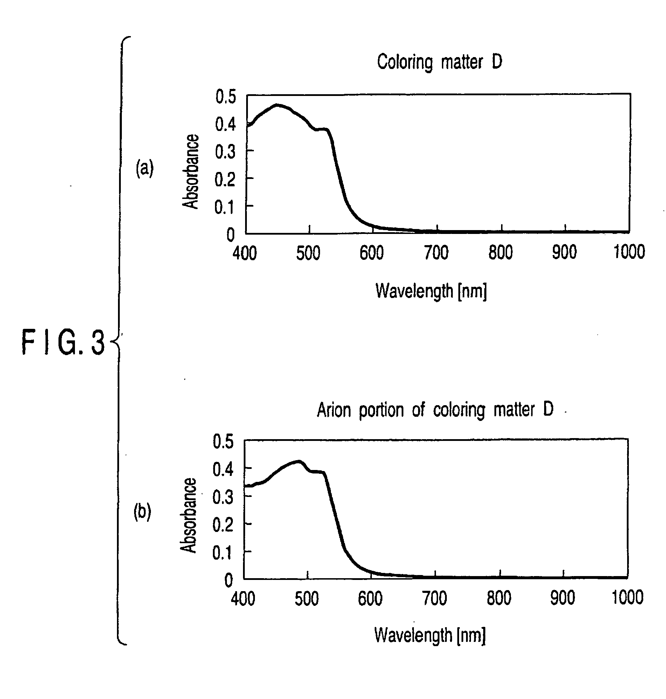

The absorbance is the value measured by monitoring the laser light intensity transmitted from the pigment side, by emitting laser light from a substrate side, in a state of a pigment solution applied on the optical disk substrate surface formed and duplicated same as in the embodiment described below, that is, with a thin film layer of the pigment formed on the disk substrate. Absorbance A is expressed as A = -log₁₀ (I/I₀), where I₀ is incident laser light intensity, and I is transmitted laser light intensity. In FIGS. 2 and 3, the thickness of the pigment layer was about 90 nm to 120 nm at the time of measurement. The pigment solution concentration and spin coating condition are same as the condition in the embodiment explained below. Instead of the absorbance, the transmissivity may be used as the index of comparison of pigment. For example, in the short wavelength laser light such as blue laser light, the transmissivity B may be calculated as B = 1 - A.

A portion (a) of FIG. 2 shows changes of absorbance in relation to wavelength of emitted laser light in Pigment A. A portion (b) of FIG. 2 shows changes of absorbance in relation to wavelength of emitted laser light in Pigment B. A portion (c) of FIG. 2 shows changes of absorbance in relation to wavelength of emitted laser light in Pigment C.

A portion (a) of FIG. 3 shows changes of absorbance in relation to wavelength of emitted laser light in Pigment D. FIG. 3B shows changes of absorbance in relation to wavelength of emitted laser light in the anion portion of Pigment D.

As clear from the characteristics shown in FIGS. 2 and 3, in Pigments A to D, the maximum absorption wavelength region is shifted to the longer wavelength side from the recording wavelength (405 nm). The write-once type optical disk of the embodiment contains the organic pigment having such characteristic in the recording film, and is designed to have the so-called L-to-H characteristic so that the light reflectivity after laser light irradiation may be higher than the light reflectivity before laser light irradiation. Therefore, by using short wavelength laser light such as blue laser light, it is excellent in storage durability, reproduced signal SN ratio, and bit error rate, and information can be recorded and reproduced at high density and performance at a sufficiently practical level.

That is, this write-once type optical disk has the maximum absorption wavelength of the recording film including the organic pigment shifted to the longer wavelength side from the wavelength of laser light for recording, and hence can suppress small the absorbance of light of shorter wavelength such as ultraviolet ray, so that it is excellent in light stability and high in reliability in information recording reproduction.

At the moment of recording of information, since the light reflectivity is low, cross light due to reflection and diffusion does not occur. Thus, even if information is recorded in the adjacent track, the reproduced signal SN ratio and bit error rate hardly deteriorate. Concerning heat, further, the contrast and resolution of the recording mark can be maintained at high quality, and the recording sensitivity can be designed easily.

In order to obtain a favorable L-to-H characteristic, the absorbance at recording wavelength (405 nm) is preferred to be 0.3 or more, that is, the transmissivity is 0.7 or less. More preferably, the absorbance should be 0.4 or more, that is, the transmissivity 0.6 or less.

In the write-once type optical disk, the shape of the groove as the recording and reproducing track is very important for the recording and reproducing characteristic. As a result of intensive studies by the present inventors, in particular, the relation of the groove width and land width is found to be important.

When the groove width is same as the land width or smaller than the land width, the reproduced signal SN ratio and bit error rate in recorded information tend to deteriorate. In other words, a favorable recording and reproducing characteristic can be obtained when the groove width is larger than the land width.

Generally, to record information in a writable optical disk, it is required to record various address information such as a track number, a sector number, a segment number, and an ECC (error checking and correcting) block address, preliminarily in the optical disk.

Means for recording such address information can be realized by wobbling the groove in the radial direction of the optical disk. That is, recording of address information by wobbling can be realized by means for modulating the wobble frequency corresponding to the address information, means for modulating the wobble amplitude corresponding to the address information, means for modulating the wobble phase corresponding to the address information, or means for modulating the wobble polarity inverting interval corresponding to the address information. Not limited to the wobble groove, means for using also the height changes of the land, or means for burying pre-pits in the land may be also used.

The wobble amplitude of the groove, and the groove depth are also found to have serious effects on the recording and reproducing characteristic.

The organic pigment of the invention has an excellent light resistance to natural light, artificial light and other environmental light, but does not exclude combined use with one or plural light resistance improving agents (quenchers), as required, for the purpose of suppressing color fading, deterioration, degeneration, or decomposition of the organic pigment by singlet oxygen or the like possibly generated by irradiation with laser light. The light resistance improving agent to be used with the organic pigment includes an amine compound, a carotin compound, a sulfide compound, and a phenol compound disclosed in published patent No. WO00/075111, "Coloring material engineering handbook" edited by Coloring Material Society, first edition, pp. 1274-1282, Asakura Shoten, November 25, 1989, "Dyes and chemicals" by Masahiro Shinkai et al., Vol. 37, No. 7, pp. 185-197, 1992, etc., and also an acetyl acetonate chelate system, a salicyl aldehyde oxime system, a diimmonium system, a dithiol system, a thiocatechonal chelate system, a thiobis phenol chelate system, a bisdithio-alpha-diketone chelate, a formazan system, other transition metal chelate, and other metal oxide. As required, they may be combined properly. Among them, from the viewpoint of improvement of light resistance of the organic pigment and mixed state with the organic pigment of the invention, metal complexes of formazan system and dithiol system are particularly preferred because a favorable amorphous solid matter can be formed. Although variable with applications, the amount of combined use of a light resistance improving agent is usually 1 mass% or more of the organic pigment, preferably increase or decreasing in a range of 3 to 30 mass%. When used together with the light resistance improving agent, the organic pigment of the invention is preliminarily mixed uniformly with the light resistance improving agent, and is applied to the substrate in a form of liquid composition, or it may be adjusted by increasing or decreasing so that the blending rate of the organic pigment and light resistance improvement agent on the substrate are set within a predetermined range, and is applied in a liquid form in the substrate.

### EXAMPLES

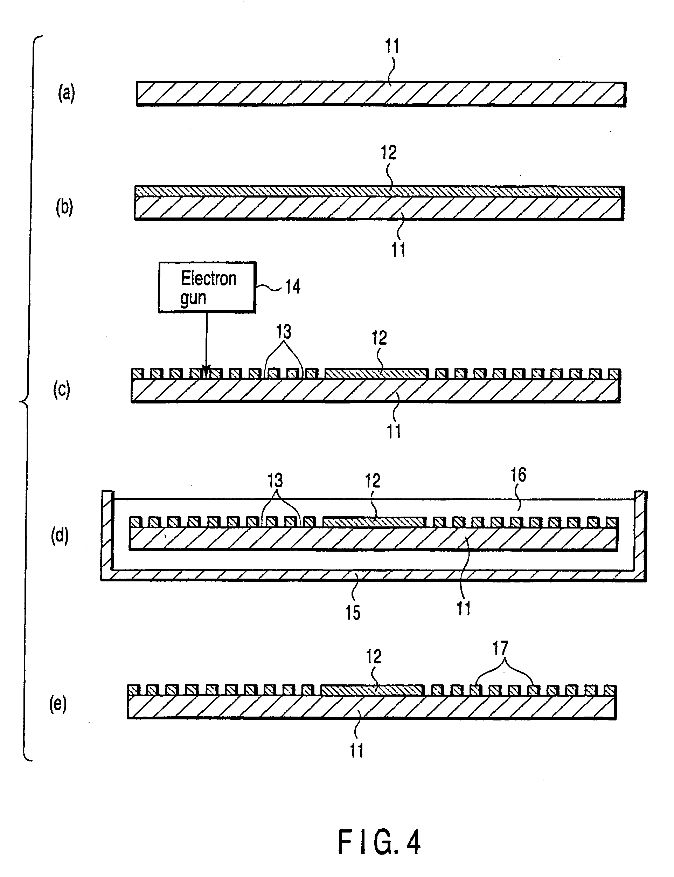

Now, the above-mentioned embodiment will be explained with reference to Example. First, a disk damper for high density R disk is fabricated in the following procedure. That is, as shown in FIG. 4A, a silicon wafer 11 for semiconductor manufacture formed in a disk of 200 mm in diameter and 0.725 mm in thickness is prepared.

The silicon wafer 11 is immersed in a mixed solution (liquid temperature 100°C) of hot concentrated sulfuric acid and hydrogen peroxide water for 5 minutes. Then, the silicon wafer 11 is immersed and rinsed in superpurified water, cleaned ultrasonically, immersed in a hot superpurified water tank at 70°C, and is gradually lifted and dried.

Consequently, as shown in (b) of FIG. 4, an electron beam resist film 12 is formed on the surface of the silicon wafer 11. The electron beam resist film 12 is formed on the surface of the silicon wafer 11 by spin coating of a resist solution composed of 100 wt.% of an anisole solvent (ZEP-A manufactured by Nippon Zeon) and 86.2 wt.% of electron beam resist (ZEEP520A7 manufactured by Nippon Zeon).

In the spin coating condition, the silicon wafer 11 is put on a spin table by vacuum chuck, and while rotation of the spin table is stopped, 0.1 micron filter of the resist liquid 12 is dropped on the center of the silicon wafer 11, and the spin table is rotated at 2500 rpm.

Then, as shown in a portion (c) of FIG. 4, grooves 13 are formed in the electron beam resist film 12. Specifically, the silicon wafer 11 coated with the electron beam resist film 12 is put in a vacuum tank of an electron beam cutting machine, which is evacuated to a level of 10⁻⁵ Pa, and the silicon wafer 11 is rotated. Electron beam is emitted from an electron gun 14 into the electron beam resist film 12, and concentric or spiral groove pattern is recorded by electron beam.

The recording condition of the groove pattern includes an electron beam acceleration voltage of 50 kV, a beam current of 120 nA, a beam diameter of 110 nm, and a recording linear speed of 1.1 m/sec. The recording region of the grooves 13 is a range of radius of the silicon wafer 11 of 23 mm to 59 mm.

After recording of the grooves 13, the silicon wafer 11 is taken out from the vacuum tank of the electron beam cutting machine, and by dip development by immersing in an organic developing solution 16 in an immersion tank 15 as shown in a portion (d) of FIG. 4, a resist pattern of grooves 13 is formed.

Next, as shown in a portion (e) of FIG. 4, by DC sputtering of a Ni film, a Ni thin film 17 is formed on the surface of the resist pattern, and is made conductive.

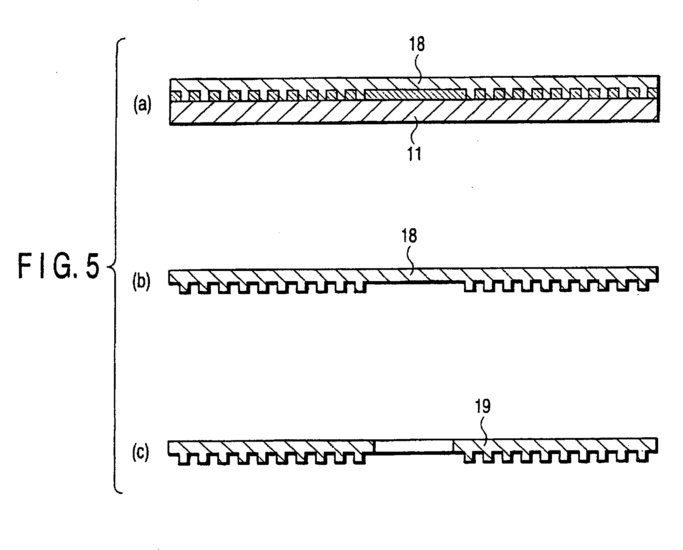

Thereafter, as shown in a portion (a) of FIG. 5, by Ni electrocasting on the Ni thin film 17, a Ni plated layer 18 of 247 microns in thickness is formed. As shown in a portion (b) of FIG. 5, after the Ni plated layer 18 is peeled off, and spin cleaned, the surface residual resist is peeled off by oxygen RIE. Then, as shown in a portion (c) of FIG. 5, a protective film is applied on the Ni plated layer 18, the reverse side is polished, the inside diameter and outside diameter are machined, and a disk stamper 19 is fabricated.

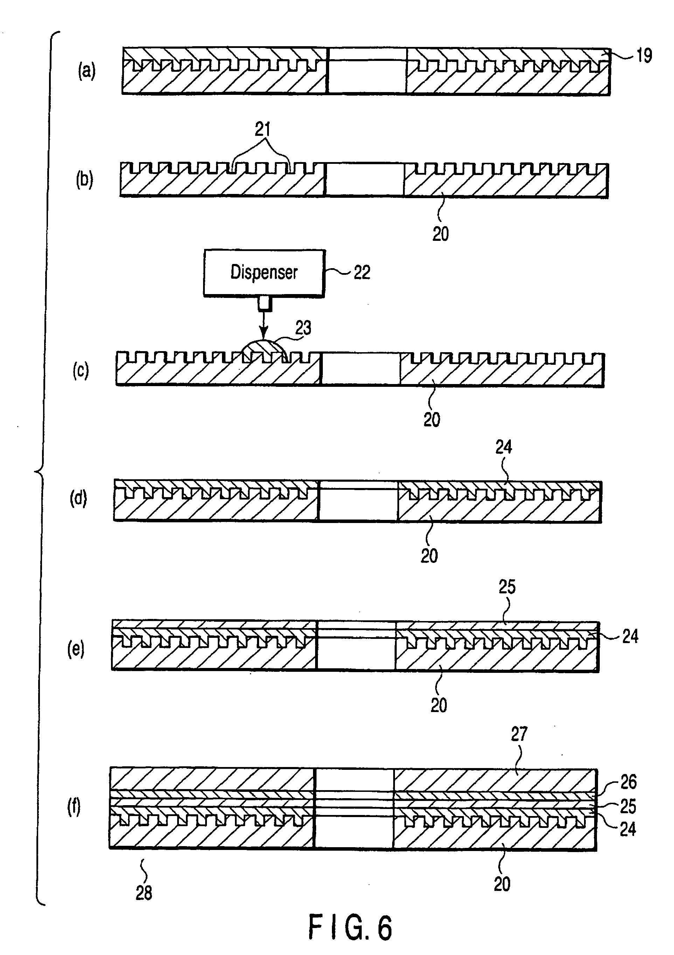

Next, by using the disk stamper 19, a write-once type optical disk is manufactured. That is, as shown in FIG. 6A, by injection molding with an injection molding machine SD40 manufactured by Sumitomo Heavy Industries by use of the disk stamper 19, a transparent disk substrate 20 of polycarbonate of 0.6 mm in diameter is duplicated as shown in a portion (b) of FIG. 6. As a matter of course, grooves 21 are formed in the disk substrate 20.

Then, as shown in a portion (c) of FIG. 6, by using a dispenser 22 having a nozzle diameter of 21G, an organic pigment solution 23 obtained by dissolving an organic pigment in a solvent mentioned below is dripped on the formed surface of the grooves 21 of the disk substrate 20. By rotation and control of the disk substrate 20, as shown in a portion (d) of FIG. 6, the organic pigment solution 23 fills up the grooves 21, and a recording film 24 is formed.

In the spin coating condition of the recording film 24, first rotating and driving from the stopped state of the disk substrate 20 up to 300 rpm in 1 second, the state is held for 8 seconds, and the organic pigment solution 23 is applied from the dispenser 22. The rotating speed of the disk 20 is increased to 1800 rpm in 2 seconds, and the state is held for 15 seconds. Thereafter, the speed of the disk substrate 20 is increased to 3000 rpm in 2 seconds, and the state is held for 3 seconds.

By controlling the rotating speed in the second stage, the film thickness of the recording film 24 can be controlled. That is, when the rotating speed in the second stage is low, the thickness of the recording film 24 can be increased.

In consequence, the disk substrate 20 coated with the recording film 24 is put in a clean oven, and baked for 30 minutes at 80°C, and as shown in FIG. 6E, a metal film 25 of 100 nm is sputtered on the recording film 24. The metal film 25 is made of either pure silver or Ag alloy including Nd by 0.7%, Cu by 0.9%, AgND by 1%, and Cu by 1%.

Subsequently, as shown in FIG. 6F, an ultraviolet curing resin 26 is applied on the metal film 25 by spin coating, and a disk substrate 27 of polycarbonate of 0.6 mm in thickness is adhered, thereby fabricating a write-once type optical disk (R disk) 28 containing an organic pigment in the recording film 24.

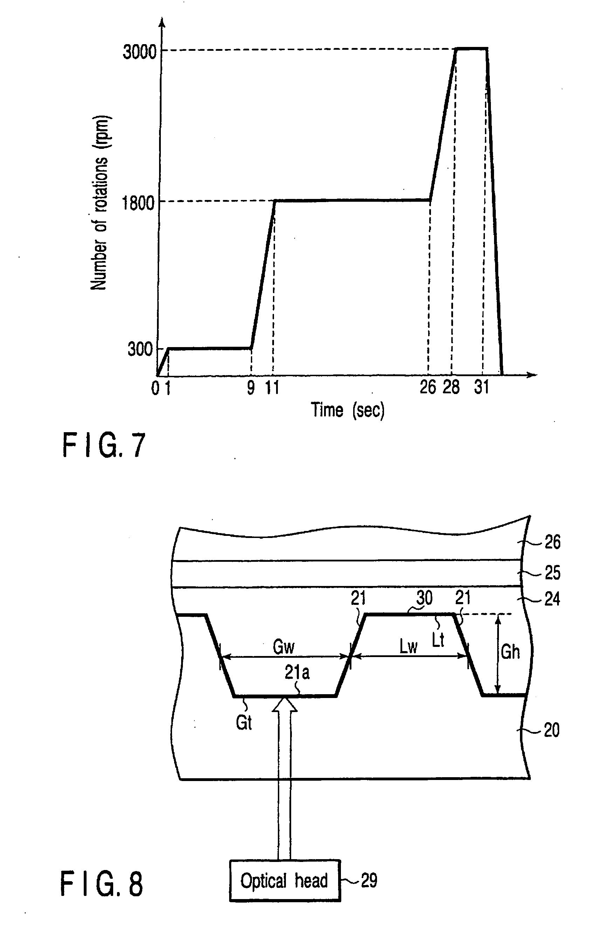

The write-once optical disk 28 thus fabricated receives, as shown in FIG. 8, laser light for recording and reproducing by an optical head 29 from the opposite side of the coated side of the recording film 24 of the disk substrate 20.

In this case, a land 30 enclosed between a bottom 21a of the groove 21 formed in the disk substrate 20 and the adjacent groove 21 is an information recording track. The recording track formed by the bottom 21a of the groove 21 is called a groove track Gt, and the recording track formed by the land 30 is called a land track Lt.

The height difference of the groove track Gt from the land track Lt is called a groove depth Gh. As seen from nearly 1/2 of the groove depth Gh, the width of the groove track Gt is called a groove width Gw, and as seen from nearly 1/2 of the groove depth Gh, the width of the land track Lt is called a land width Lw.

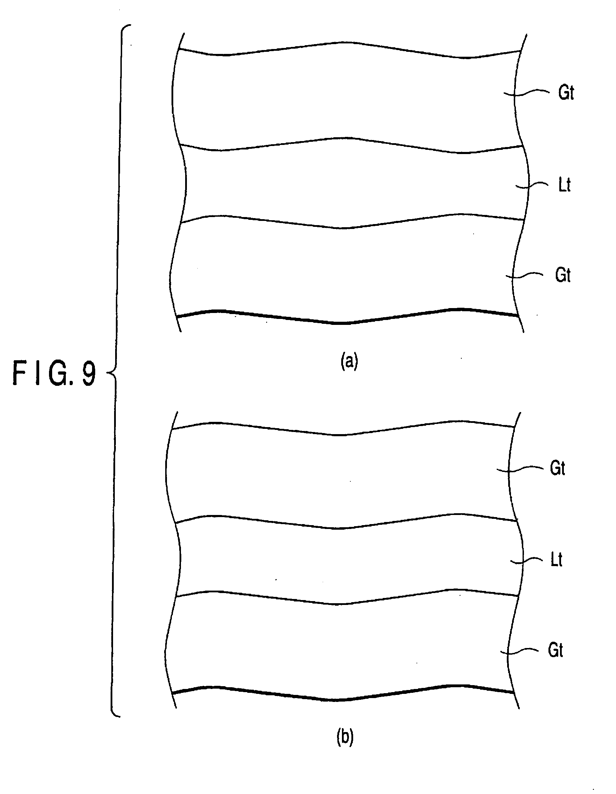

As mentioned above, the groove track Gt is wobbled in order to record various address information. A portion (a) of FIG. 9 shows a case in which adjacent groove tracks Gt are in phase, and a portion (b) of FIG. 9 shows a case in which adjacent groove tracks Gt are in opposite phase. Depending on the region of the write-once type optical disk 28, adjacent groove tracks Gt come to have various phase differences.

The monomethine cyanine pigment expressed by chemical formula 4 used in the invention is synthesized, for example, in the following procedure.

Putting 20 ml of acetonitrile in a reaction container, 2g of compound expressed by chemical formula 12 and 3.5g of the compound expressed by chemical formula 13 were added, and heated and refluxed for 20 minutes to promote reaction. After the solvent was distilled off from the reaction mixture, a proper amount of ethanol was added, and the mixture was further heated and refluxed for 30 minutes and cooled, thereby producing 3.9g of bright dark violet crystals of the monomethine cyanine pigment expressed by chemical formula 3. Part of the crystals was sampled, thermal characteristic was evaluated by measuring the melting point and decomposition point by differential scanning calorimetry, and the cyanine pigment of this example presented a decomposition point that cannot be distinguished from the melting point around 245°C. When as absorption characteristic, the visible absorption spectrum in a methanol solution was measured by an ordinary method, the monomethine cyanine pigment of the example presented a principal maximum absorption in a violet to blue region near the wavelength of 447 nm (ε = 6.94 × 10⁴). Further, solubility in an organic solvent at 20°C was investigated by an ordinary method, and the monomethine cyanine pigment of the example exhibited practically applicable solubility in organic solvents of an amide system, an alcohol system, a ketone system, a nitrile system, and a halogen system, such as chloroform, N,N-dimethyl formamide, methanol, 2,2,3,3-tetrafluoro-1-propanol, ethyl methyl ketone, acetonitrile, and chloroform. In a chloroform-d solution, ¹H-nuclear magnetic resonance spectrum of the monomethine cyanine pigment of the example was measured, and peaks were observed at the positions of chemical shift (ppm, TMS) of 0.51 (t, 6H), 0.83 (m, 4H), 0.97 (m, 4H), 1.64 (s, 12H), 2.93 (s, 6H), 3.38 (s, 6H), 3.62 (t, 4H), 5.40 (s, 1H), 6.82 (d, 2H), 7.26 to 7.49 (m, 8H), 8.00 (d, 2H), and 9.12 (s, 2H).

The monomethine cyanine pigment used in the invention may be slightly different in the preparing condition or yield depending on the structure, but a desired amount can be obtained the above method or conforming method including those expressed by chemical formulas 5 to 11, aside from those mentioned above.

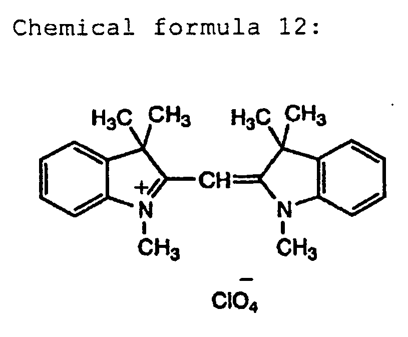

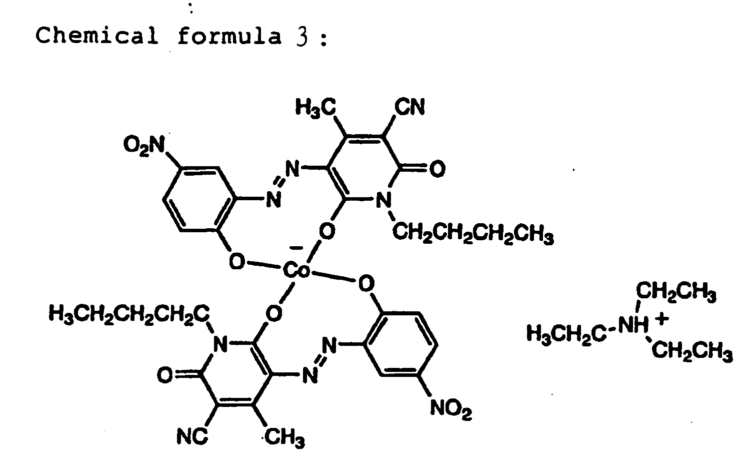

Generation of the organic pigment solution 23 is explained. The organic pigment solution 23 is composed of 1.2g of organic pigment powder dissolved in 100 ml of TFP, at dissolved concentration of 1.2% by weight. The dissolving condition in the solvent is application of ultrasonic waves for 30 minutes by putting the pigment powder in the solvent.

Using the four types of organic pigments expressed by chemical formulas 1 to 4, write-once type optical disks 28 are fabricated in the method mentioned above, and by recording and reproducing in the groove tracks Gt, evaluation test is executed. An evaluation apparatus is a Pulsetech optical disk evaluation apparatus.

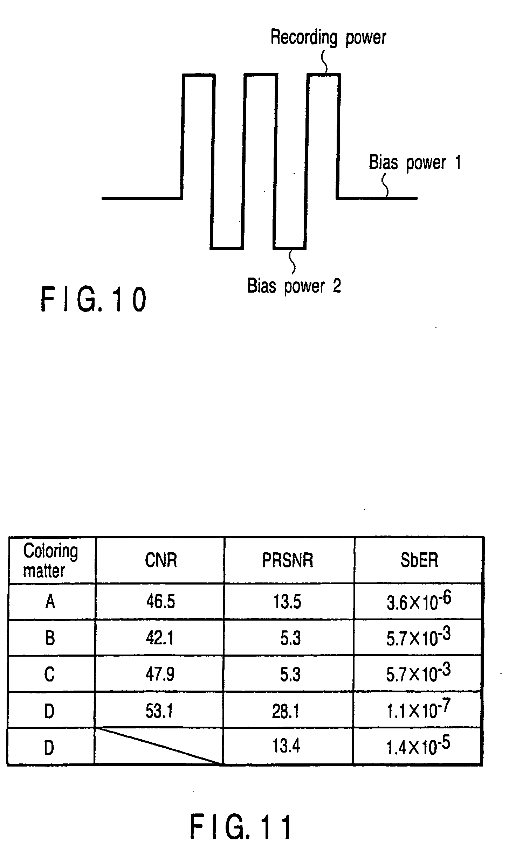

In the test condition, the numerical aperture NA of an object lens of the optical head 29 is 0.65, the wavelength of laser light for recording and reproducing is 405 nm, and the linear speed in recording and reproducing is 6.61 m/sec. Recording signals are 8-12 modulated random data, and waveforms are recorded in a specific recording power and two types of bias powers 1 and 2 as shown in FIG. 10.

The track pitch is 400 nm, the land width Lw is 1 while the groove width Gw is 1.1, the wobble amplitude of the groove track Gt is 14 nm, and the groove depth Gh is 90 nm. Recording of address information by wobble is wobble phase modulation.

Herein, as evaluation characteristic, three performances are measured: a carrier-to-noise ratio (CNR) of a reproduced signal, a partial response signal to noise ratio (PRSNR), and a simulated bit error rate (SbER). The PRSNR definition and measuring method is mentioned in Annex H of DVD Specifications for High Density Read-Only Disc Part 1 Physical Specifications Version 0.9, described in a book purchased from DVD Format Logo Licensing Co. Preferably, PRSNR is preferably 15 or more. The SbER definition and measuring method is mentioned in Annex H of DVD Specifications for High Density Read-Only Disc Part 1 Physical Specifications Version 0.9, described in a book purchased from DVD Format Logo Licensing Co. Preferably, SbER is 5.0 × 10⁻⁵ or less.

Both PRSNR and SbER are measured in a state of recording information also in adjacent tracks.

FIG. 11 shows results of measurement of each write-once type optical disk 28 using the organic pigments expressed by chemical formulas 1 to 4. Judging from the result in FIG. 11, the write-once type optical disks 28 using organic pigments in chemical formulas 1 and 3 are poor in the results of measurement of PRSNR and SbER, and are not practically applicable.

By contrast, the write-once type optical disks 28 using the organic pigments in chemical formulas 2 and 4 are satisfactory in results. The write-once type optical disks 28 using the organic pigments in chemical formula 2 is excellent in measurement, but the write-once type optical disks 28 using the organic pigments in chemical formula 4 is far superior.

In the write-once type optical disks 28 using the organic pigments in chemical formula 4 of the best result of measurement is tested by evaluation of deterioration rate by repeated reproduction. That is, by reproducing 10,000 times by reproducing laser power of 0.8 mW, the degree of deterioration of PRSNR and SbER is measured, and favorable results are obtained as shown in the bottom of FIG. 11.

Hence, as the organic pigment used in the recording film 24, it is found preferable to use a material having a monomethine cyanine pigment as a pigment portion, and an azo metal complex as an anion portion.

As described herein, by preparing a recording film made of an organic pigment having low-to-high characteristic, the invention presents a write-once information recording medium capable of recording and reproducing information at high density and high performance of practical level.

## Claims

1. A write-once information recording medium **characterized by** comprising:
a transparent substrate (20) having concentric or spiral grooves formed therein; and
a recording film (24) containing an organic pigment, being formed on the grooves on the transparent substrate,
wherein a maximum absorption wavelength region of said organic pigment from the wavelength of laser light to be emitted to the recording film is present at the longer wavelength side, a recording mark is formed on the recording film by irradiation with laser light, and the recording mark has a higher light reflectivity than the light reflectivity of the recording film before irradiation with the laser light,
**characterized in that** the organic pigment has an anion portion made of an azo metal complex, and a cation portion made of a monomethine cyanine pigment,
said organic pigment being formed by reaction between a first compound whose cation portion is made of a monomethine cyanine pigment and whose anion portion is not made of an azo metal complex and a second compound whose anion portion is made of an azo metal complex and whose cation portion is not made of a monomethine cyanine pigment.

2. The write-one information recording medium according to claim 1, **characterized in that** the cation portion of the organic pigment is expressed by general formula 3: 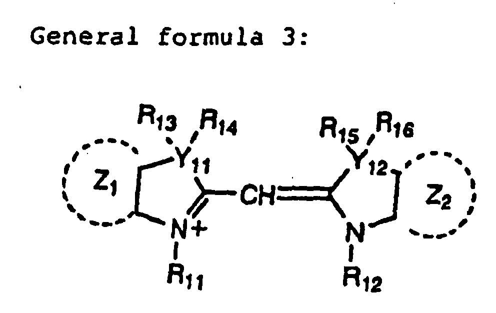 wherein Z₁ and Z₂ represent mutually same or different aromatic rings; Y₁₁ and Y₁₂ independently represent a carbon atom or a hetero atom; R₁₁ and R₁₂ represent aliphatic hydrocarbon radicals; R₁₃, R₁₄, R₁₅, and R₁₆ independently represent a hydrogen atom or a substituent; and when Y₁₁ and Y₁₂ are hetero atoms, either part or all of R₁₃, R₁₄, R₁₅, and R₁₆ are absent, and the anion portion is expressed by general formula 4: 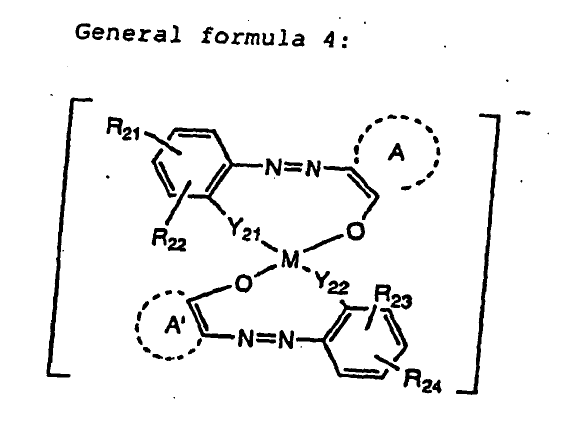 wherein A and A' represent mutually same or different complex rings, containing one or more hetero atoms selected from the group consisting of a nitrogen atom, an oxygen atom, a sulfur atom, a selenium atom, and a tellurium atom; R₂₁ to R₂₄ independently represent a hydrogen atoms or a substituent; and Y₂₁ and Y₂₂ represent mutually same or different hetero atoms selected from the elements of group VI in the periodic table.

## Patentansprüche

1. Einmal beschreibbares Informationsaufzeichnungsmedium, umfassend:
ein transparentes Substrat (20) mit darin ausgebildeten konzentrischen oder spiralförmigen Rillen und
einen ein organisches Pigment enthaltenden Aufzeichnungsfilm (24), der auf den Rillen auf dem transparenten Substrat ausgebildet ist,
wobei der Wellenlängenbereich maximaler Absorption des organischen Pigments von der Wellenlänge von Laserlicht, das auf den Aufzeichnungsfilm emittiert werden soll, auf der Seite längerer Wellenlängen liegt, eine Aufzeichnungsmarkierung auf dem Aufzeichnungsfilm durch Bestrahlung mit Laserlicht gebildet wird und die Aufzeichnungsmarkierung eine höhere Lichtreflektivität als die Lichtreflektivität des Aufzeichnungsfilms vor einer Bestrahlung mit dem Laserlicht aufweisen,
**dadurch gekennzeichnet, dass** das organische Pigment einen aus einem Azo-Metall-Komplex bestehenden Anionteil und einen aus einem Monomethincyaninpigment bestehenden Kationteil aufweist,
wobei das organische Pigment durch eine Reaktion zwischen einer ersten Verbindung, deren Kationteil aus einem Monomethincyaninpigment besteht und deren Anionteil nicht aus einem Azo-Metall-Komplex besteht, und einer zweiten Verbindung, deren Anionteil aus einem Azo-Metall-Komplex besteht und deren Kationteil nicht aus einem Monomethincyaninpigment besteht, gebildet wird.

2. Einmal beschreibbares Informationsaufzeichnungsmedium nach Anspruch 1, **dadurch gekennzeichnet, dass** der Kationteil des organischen Pigments durch die allgemeine Formel 3 dargestellt wird: 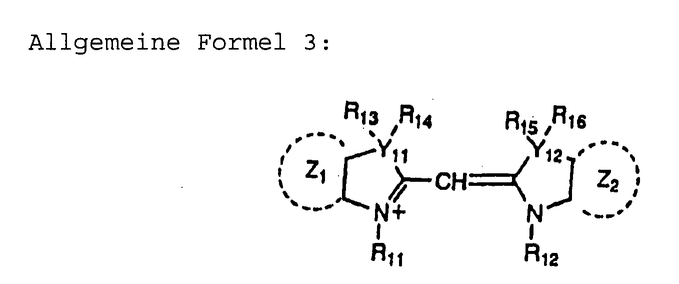 worin Z₁ und Z₂ für jeweils gleiche oder verschiedene aromatische Ringe stehen; Y₁₁ und Y₁₂ unabhängig voneinander für ein Kohlenstoffatom oder ein Heteroatom stehen; R₁₁ und R₁₂ für aliphatische Kohlenwasserstoffreste stehen; R₁₃, R₁₄, R₁₅ und R₁₆ unabhängig voneinander für ein Wasserstoffatom oder einen Substituenten stehen; und, wenn Y₁₁ und Y₁₂ Heteroatome sind, entweder ein Teil der Reste R₁₃, R₁₄, R₁₅ und R₁₆ oder alle diese Reste nicht vorhanden sind, und der Anionteil durch die allgemeine Formel 4 dargestellt wird: 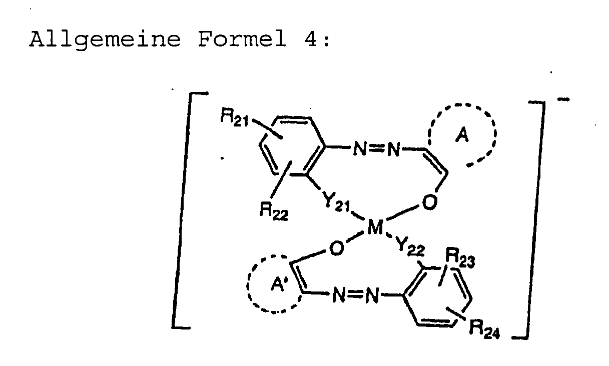 worin A und A' für jeweils gleiche oder verschiedene Komplexringe, die ein oder mehrere Heteroatome enthalten, die aus der Gruppe von einem Stickstoffatom, einem Sauerstoffatom, einem Schwefelatom, einem Selenatom und einem Telluratom ausgewählt sind, stehen; R₂₁ bis R₂₄ unabhängig voneinander für ein Wasserstoffatom oder einen Substituenten stehen; und Y₂₁ und Y₂₂ für jeweils gleiche oder verschiedene Heteroatome stehen, die aus den Elementen der Gruppe VI im Periodensystem ausgewählt sind.

## Revendications

1. Support d'enregistrement d'information non effaçable, **caractérisé en ce qu'**il comprend :
un substrat transparent (20) présentant des rainures concentriques ou spirales formées dans celui-ci ; et
un film d'enregistrement (24) contenant un pigment organique étant formé sur les rainures sur le substrat transparent,
dans lequel une région de longueur d'onde d'absorption maximale dudit pigment organique de la longueur d'onde de lumière laser à émettre vers le film d'enregistrement est présente sur le côté de la longueur d'onde plus longue, une marque d'enregistrement est formée sur le film d'enregistrement par irradiation avec de la lumière laser, et la marque d'enregistrement présente une réflectivité de lumière plus élevée que la réflectivité de lumière du film d'enregistrement avant l'irradiation avec la lumière laser,
**caractérisé en ce que** le pigment organique présente une portion d'anion constituée d'un complexe d'azo métal et une portion de cation constituée d'un pigment de monométhinecyanine,
ledit pigment organique étant formé par réaction entre un premier composé dont la portion de cation est constituée d'un pigment de monométhinecyanine et dont la portion d'anion n'est pas constituée d'un complexe d'azo métal et un second composé dont la portion d'anion est constituée d'un complexe d'azo métal et dont la portion de cation n'est pas constituée d'un pigment de monométhinecyanine.

2. Support d'enregistrement d'information non effaçable selon la revendication 1, **caractérisé en ce que** la portion de cation du pigment organique est exprimée par la formule générale 3 : 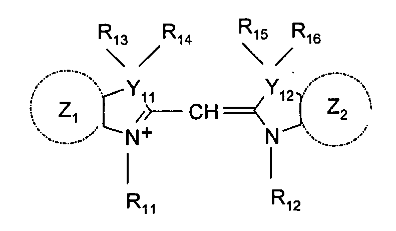 dans laquelle Z₁ et Z₂ représentent des noyaux aromatiques mutuellement identiques ou différents ; Y₁₁ et Y₁₂ représentent indépendamment un atome de carbone ou un hétéroatome ; R₁₁ et R₁₂ représentent des radicaux hydrocarbonés aliphatiques ; R₁₃, R₁₄, R₁₅ et R₁₆ représentent indépendamment un atome d'hydrogène ou un substituant ; et lorsque Y₁₁ et Y₁₂ sont des hétéroatomes, soit une partie soit la totalité de R₁₃, R₁₄, R₁₅ et R₁₆ est absente, et la partie d'anion est exprimée par la formule générale 4 : 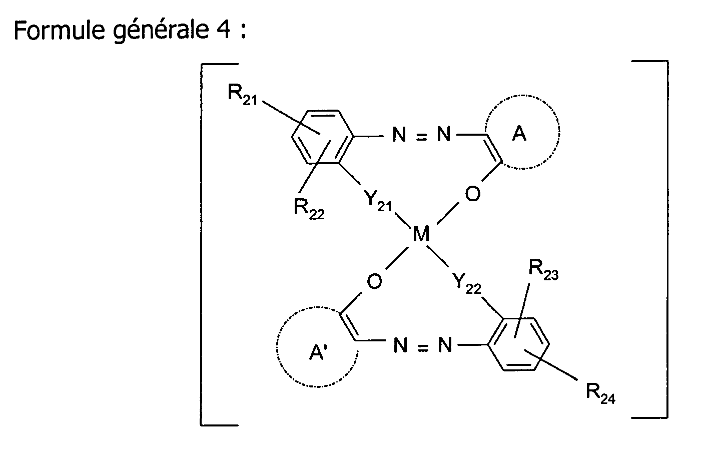 dans laquelle A et A' représentent des noyaux complexes mutuellement identiques ou différents contenant un ou plusieurs hétéroatomes choisis parmi un atome d'azote, un atome d'oxygène, un atome de soufre, un atome de sélénium et un atome de tellurium ; R₂₁ à R₂₄ représentent indépendamment un atome d'hydrogène ou un substituant ; et Y₂₁ et Y₂₂ représentent des hétéroatomes mutuellement identiques ou différents choisis parmi les éléments du groupe VI dans le tableau périodique.
